# EUROPEAN PATENT APPLICATION

(11) **EP 1 892 892 A1**
(43) Date of publication of application: **27.02.2008**
(21) Application number: 06017659.1
(22) Date of filing: 24.08.2006
(51) Int. Cl.: H04L 12/56

(54) **Method and network entities for supporting MBMS service in a LTE radio communication network**

(71) Applicant: Nokia Siemens Networks GmbH & Co. KG, 81541 München (DE)
(72) Inventor: Breuer, Volker, 16727 Bötzow (DE); Martos-Riano, Demian, 10115 Berlin (DE); Ulrich, Thomas, 67098 Bad Dürkheim (DE)

(57) **Abstract**

The present invention relates to a method for radio communication within a mobile radio communications network, wherein information is transmitted via dedicated radio (Cell A_m) cells from a radio network node (A eUTRAN BS) serving said radio cells to at least one mobile station, whereby information further comprises pilot information for identifying said transmitted information at said mobile station with respect to the origin of said information and/or to said radio cell carrying said information.

Preferably the pilot information is signalled with a signal power needed within said dedicated radio cell carrying said information. The dedicated radio cells preferably provides multicast communication, in particular multimedia broadcast multicast services (= MBMS).

The radio network node can serve radio cells (Cell A_u) providing unicast communication and dedicated radio cells (Cell A_m) providing multicast communication.

The invention also relates to a radio communications network and network entities, e.g. a radio network node like a base station and a mobile station, comprising means for radio communication and for performing the above mentioned inventive method.

## Description

The present invention relates to a method and network entities, e.g. a radio network node like a base station or a network controller and mobile stations, for radio communication, wherein information is transmitted from a radio network node serving radio cells to a group of mobile stations.

### BACKROUND OF INVENTION

This invention is particularly used in the field of mobile radio communications, preferably for their future evolution.

For the evolved Packet Core and the evolved UTRAN being currently discussed in standardization activities like 3GPP (Third Generation Partnership Project). So-called MBMS (Multimedia Broadcast Multicast Services) is seen as a key feature of the future mobile/cellular communications system.

Multimedia Broadcast Multicast Service (MBMS) is a broadcasting service that can be offered via existing GSM and UMTS cellular networks. The infrastructure offers an option to use an uplink channel for interaction between the service and the user, which is not a straightforward issue in usual broadcast networks, as for example conventional digital television is only a one-way (unidirectional) system. MBMS uses multicast distribution in the core network instead of point-to-point links for each end (user) device.

In addition, in eUTRAN (i.e. LTE) MBMS shall be offered enabling soft or selective combining at the UE, in order to improve the efficiency at the cell border. This requires high downlink synchronization accuracy. The same MBMS service broadcasted from different nodes is synchronised with a high accuracy, suited for macro diversity combining in the UEs. In OFDM systems, UE manufacturers postulate a synchronisation accuracy of no less than the Cyclic Prefix of the OFDM symbol; in this way a UE in the field will be able to perform soft combining of the data streams provided by different NodeBs. If in addition a spectrum chunk of carrier is in use for MBMS and not used for any unicast service, all received signals can be constructively combined, given that DL transmissions from different NodeBs are bit-identically encoded. Therefore, provisioning of the MBMS service in DL is coverage limited only, according to the reach of the radio signals and the possibility to combine several from different sources, and not interference limited as it is the case in DL for unicast services. This is in opposite to UMTS where the DL is in general interference or (capacity limited) due to the nature of CDMA being a compound of a code stack.

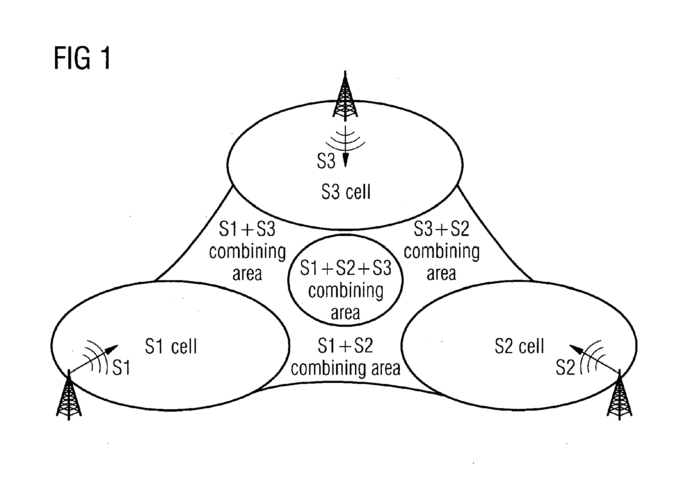

For instance, Fig. 1 shows a soft or selective combining at the UE (described as combining areas e.g. S1+S3, S3+S2, S1+S2, S1+S2+S3) of two or three identical signals S1, S2, S3 from different eNBs serving radio cells S1 cell, S2 cell and S3 cell within a mobile radio communications network.

Due to the high available BS power and support of selective or soft combining at the UE, the MBMS coverage area of a network node, e.g. BS/NodeB, can be far larger than its normal coverage area for unicast services as shown in Fig. 1.

For this reason, MBMS services will be preferably offered over a Single Frequency Layer (SFL) in the network, used in DL from a reduced number of base stations with high transmission power capacity.

For example, in order to offer mobile TV over MBMS, the following scenario can be expected: coverage-driven rollout of mobile TV over a large geographical area (entire city, region, or even country), using a single LTE frequency chunk/band; few Node Bs, in comparison with the total amount of deployed Node Bs, would be required to broadcast the service (coverage limited and not interference limited in the DL); the UL channel for the UEs shall anyway be ensured in its own cell, a cell not necessarily assigned to the Node B offering the MBMS service). The bigger the broadcasted area, the higher the probability that the number of interested (mobile TV watching) customers is sufficiently high and justifies the use of PtM (Point to Multipoint) broadcasting.

A hierarchical cell structure of large coverage, MBMS capable cells, overlapping far smaller cells raises out of this approach to MBMS delivery.

In this context, it is also interesting to point out that the MBMS cell layer builds up a Rel'99 W-CDMA cell layer (but with even higher synchronization), with similar soft handover scenarios in downlink. Below this SFN cell layer, there is another one of higher topological density. Usually the radio characteristics of this eUTRAN layer are such that there are no soft handover scenarios.

As a result, it is necessary to introduce in eUTRAN novel mechanisms in order to support MBMS mobility management, and for this purpose it is possible to take advantage of the availability of the underlying, dense radio cell layer, for Uplink purposes.

Taking into further consideration the described approach to LTE MBMS, we identify requirements that are specific of the MBMS cells and the MBMS SFN (Single Frequency Network). These requirements lead to specific LTE MBMS mechanisms, the combination of which represents an innovation with respect to other MBMS systems or mobile communication systems. The requirements are:
- UE shall be capable to identify MBMS signal and multicasted/broadcasted services.
- UE shall be capable to request for specific services at specific cells.
- UE shall be capable to report on the quality of the reception of specific services, in order that the network accordingly modifies MBMS radio transmission characteristics.
- "MBMS Soft Handover" UE shall be capable to maintain MBMS reception while moving between areas with different radio reception conditions (e.g. radio cells).
- Network shall be capable to offer MBMS services on the radio interface in a efficient way, optimizing the output power levels and the areas over which MBMS is being offered.

Currently, in UTRAN and GERAN, MBMS is conceived as an additional service with no impact on the basic mechanisms for cell identification and mobility management.

For identifying said transmitted information at said mobile station with respect to their origin and to said radio cell carrying said information.

Currently, MBMS has no suitable synchronization/control/identifying signal, which is not necessary as the cover area is the same as the coverage area of the unicast thus the P-CPICH and the indicated offsets of S-CCPCH carrying the MBMS service to P-CPICH is used for combining decisions for the MBMS signal. In addition it needs to be noted that the MBMS neighbour cell and the unicast neighbour cell are identical in 3GPP which may not be the case in LTE for MBMS. Different neighbour relations will exist for MBMS and unicast in LTE which require corresponding means.

### SUMMARY OF INVENTION

It is therefore an object of the invention to improve the above mentioned MBMS delivery approach particularly with respect to eUTRAN.

This object is solved by features mentioned in the independent claims. Preferred embodiments of the invention are disclosed in the dependent claims.

An aspect of the invention is to a method for radio communication within a mobile radio communications network, wherein information is transmitted via dedicated radio cells from a radio network node serving said radio cells to at least one mobile station, whereby information further comprises pilot information for identifying said transmitted information at said mobile station with respect to the origin of said information and/or to said radio cell carrying said information.

Preferably the pilot information is signalled with a signal power needed within said dedicated radio cell carrying said information. The dedicated radio cells preferably provides multicast communication, in particular multimedia broadcast multicast services (MBMS).

The radio network node can serve radio cells providing unicast communication and dedicated radio cells providing multicast communication.

In E-UTRAN, for conventional (also called Unicast) services, the pilot signal strength will be interference limited. The benefit of a specific E-MBMS pilot signal proposed by the invention is that it is coverage (strength) limited; it does not need to be tuned up in terms of strength, as simultaneous E-MBMS signals are meant to be combined at the UE.

The pilot information can further comprise an identifier (e.g. BSIC) for dedicated radio cells particularly providing multicast communication and maybe in addition service specific information regarding multicast communication.

Said service specific information is preferably related to at least one service currently multicasted by said radio network node. It is possible that said service specific information is related to neighbouring cell information providing multicast communication.

The invention also relates to a radio communications network and network entities, e.g. a radio network node like a base station and a mobile station, comprising means for radio communication and for performing the above mentioned inventive method.

As partly afore discussed, in eUTRAN, contrary to the current methods in GERAN and UTRAN, MBMS is offered in a single frequency network, and requires specific mechanisms in order to provide in a seamless and efficient way MBMS to UEs on the move, involving as well uplink signalling from the UE for MBMS specific purposes. This uplink information is delivered over cells and between eNBs not necessarily related to the MBMS transmissions. This is necessary, in order to overcome the limited feedback possibilities of the UE and the need to listen for service indication to separate reserved MBMS frequency or data chunks.

According to the invention, in eUTRAN MBMS pilots/pilot signals are introduced. These pilots will be a common sequence for all cells especially transmitted for MBMS in the MBMS layer, thus these pilots are neither dedicated nor common pilots but rather group (active MBMS users) related.

In an advanced stage besides the common MBMS pilot a signature being typical for the base-station BSIC (base station identifier code may exist in addition). In a even more advanced state it is an advantage if the pilots can be service specific, i.e. besides a common part which may be present or not each MBMS service is characterized by having its special pilot structure being part of the information provided to the UE prior session start. Thus the UE knows that after receiving this pilot from an MBMS neighbour he can provide the corresponding MBMS signal.

In case that an MBMS NodeB has currently no users to serve it may only provide the MBMS service typical or common pilots up on receiving this pilot signal without message parts/transmission afterwards the UE can request the NodeB to start the transmission of the corresponding service. The UL message may be transferred via several NodeBs via a so-called X2-interface to the DL serving NodeB which can be identified by the contained BSIC signal.

### BRIEF DESCRIPTION OF THE DRAWINGS

Preferred embodiments of the present invention will now be described with reference to the accompanying drawing in which:
Fig. 1 illustrates a schematic diagram as afore described,
Fig. 2 shows a schematic diagram depicting a MBMS coverage area versus a unicast (voice) coverage area,
Fig. 3 shows a schematic structure of possible alternatives for an E-MBMS pilot.

### DETAILLED DESCRIPTION OF THE DRAWINGS

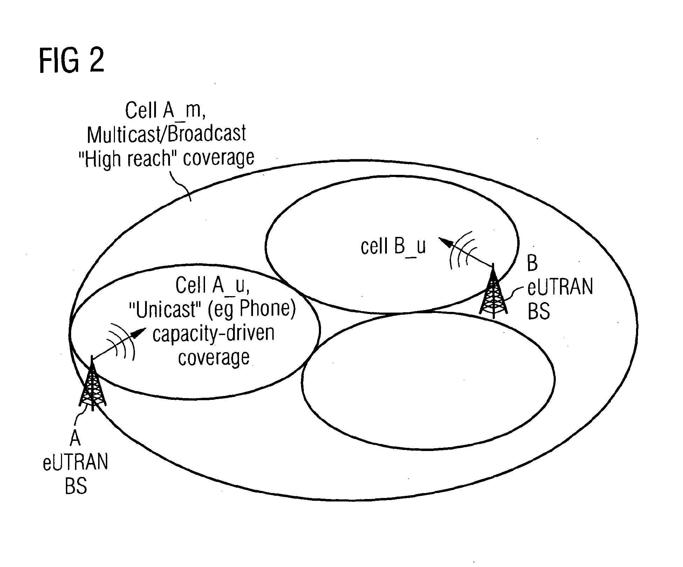

Fig. 2 generally shows an eUTRAN Base station A serving radio cells Cell A_m (MBMS coverage) and Cell A_u (Unicast coverage). It is illustrated a further eUTRAN Base station B serving Cell B_u (Unicast coverage). Additionally a further cell is shown with no special allocation to any of the depicted elements.

The illustrated MBMS coverage area from A overlaps Cell A_u as well as Cell B_u.

According to the above-mentioned context, the following requirements should be fulfilled by the presented invention:
- Implementing an MBMS- specific pilot signal.
- Broadcast in the MBMS cell of MBMS SFN specific information, e.g. neighbouring MBMS cells.
- UE reports, eventually over another, non-MBMS cell, about MBMS radio reception conditions and/or service requests (MBMS Uplink is ensured by the whole eUTRAN infrastructure, not only those MBMS cells conforming the MBMS SFN). These reports may involve eNB to eNB signalling.
- The radio frame protocol is simplified in the case of MBMS, according to the advantages introduced by the high synchronization accuracy.
- Network creates radio conditions in order to ensure seamless mobility combined with MBMS availability to the UE.
- Network applies slow power control mechanisms in order to optimize in terms of radio efficiency, the delivery of MBMS services.
- Network applies counting mechanisms in order to optimize the delivery of MBMS services.

In LTE, the MBMS SFL with soft handover in downlink and a dense underlying cell network (lower-hierarchy cells) as illustrated in Fig. 2, needs to support part of the conventional Rel'99 mobility management mechanisms such as:
- Own MBMS common pilot channel, different from currently considered P-CPICH.
- Broadcasting neighbouring MBMS cell information (MBMS BSIC NCELL).

### For explanation concerning UTRAN:

P-CPICH (UTRAN) is used in UMTS to enable channel estimation. The CPICH uses a pre-defined bit sequence. It has a fixed rate of 30 kbps with a spread factor (SF) of 256. This allows the UE to equalize the channel in order to achieve a phrase reference with the SCH (Synchronization Channel) and also estimation in terms of power control. The same channel is always employed on the Primary CPICH.

BSIC NCELL is the BSIC of an adjacent cell (UTRAN). This code is used to identify and decode the BCCH (Broad Control Channel) of neighbouring cells so that the MS (Mobile Station) may take measuring reports to facilitate handover, or to allow the MS to make cell selection and reselection calculations.

This concept can also be employed for eUTRAN.

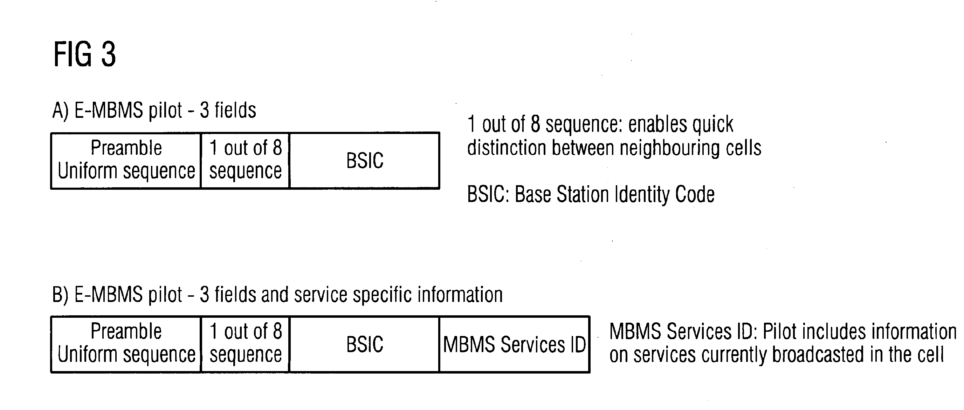

Fig. 3 generally depicts firstly in A) an example for an E-MBMS pilot comprising 3 fields: The Preamble, a 1 out of 8 sequence and a BSIC. Secondly in B) an example for an E-MBMS pilot comprising 3 fields and service specific information is shown.

Considering the different options for an MBMS pilot signal an identical (e.g. PLMN wide) unique signal is possible due to the accurate synchronization level of the MBMS SFL. The advantages of a unique MBMS pilot signal with respect to a cell-specific one are briefly outlined in the following:
PLMN unique MBMS Pilot signal (uniform sequence):
   This method allows less complexity of the UE in order to support MBMS reception. The UE receives a single MBMS signal, may evaluate the SIR (Signal to Interference Ratio) according to the pilot, and may report back to the network, via its UL-relay cell, if the Rx (reception) signal strength is insufficient. The network shall then adjust the MBMS signal in for the specific cell where the UE is located, it may activate neighbouring MBMS cells or increase the MBMS tx (transmission) output power at one or more MBMS cells covering or bordering with the originating UL-relay cell.
   "1 out of N" pre-determined subsequence (as shown in the examples of figure 3):
   In order to ease to the UE the identification of signals belonging to different MBMS cells, it is proposed that the pilot signal includes an arbitrary sequence out of N pre-defined that distinguishes it from neighbour pilot signals. In order to ease implementation, and since the number of neighbouring cells will be limited, an appropriate value for N is 8.
BSIC information:
   BSIC is a code in GSM which is broadcast on the SCH (Synchronization Channel) in order to identify the NCC (Network Colour Code) and the BCC (Base Station Colour Code). The BSIC is a radio cell identifier which can also be employed for UTRAN and/or eUTRAN.
   The following field in the pilot signal shall contain BSIC information. This is necessary in order to allow UEs to provide in its messages information regarding the cell providing them MBMS. This message is ought to be relayed from another cell (typically, a Unicast cell), for this reason this information is necessary in the frame of work of E-MBMS and specific to the E-MBMS pilot.
MBMS service related information (e.g. as shown in figure 3):
   It is necessary not only to perform MBMS presence with an MBMS pilot signal, but information on the available broadcast or multicast services is of great use. The MBMS pilot signal may therefore provide additional information on which services are being provided. If the UE does not find services it is subscribed for, it may request them to the network, indicating the MBMS pilot signals together with the strength at which they are being received. The UL-relay cell receives (with ACK) this information and forwards it to the MBMS cell it is MBMS-subordinated, since the MBMS pilot signal of this MBMS cell is, with high probability, among the best received ones.
   This information may be complemented with optional information (e.g. signal strength, current session status, etc.).

In the MBMS cell's SIB (System Information Block), information on adjacent MBMS cells is provided.

The following mechanism provides mobility across MBMS cells to the UE: when the UE moves, the MBMS signal may incorporate other MBMS cells' signals. The UE is able to receive and use these new signals without any further support from the network. In case the newly incorporated MBMS signals are not providing the specific MBMS services the UE is interested for, then the UE will request from the network via the UL relay cell to provide the missing services on the newly identified cells.

It is necessary to define mechanisms allowing the interruption of an MBMS service in a given MBMS cell. Precise counting mechanisms based on an exhaustive use of UE location in the HCO (Hierarchical Cell Ordering) structure defined previously will work but are complex to implement and require frequent signalling between UE and network.

A possible replacement of the counting mechanism consists of the reduction of the MBMS signal output power for the considered service at a particular MBMS cell. Affected UEs will request an improvement of the signal for that particular service, together with the information on the received MBMS pilot signals and their strength. Based on this information the network decides how to recover the quality for that particular UE. This improvement may be based in:
- Restoring the signal strength back to the original value.
- Increase signal strength for that particular service but from another MBMS cell (or cells).
- Establish the MBMS service from other cell(s).

This mechanism allows "fine-tuning" of the output power for a particular MBMS service at a particular MBMS cell, and allows certain improvements such as e.g. use a higher modulation scheme in a reduced number of tones for the same MBMS service.

The delivery of the MBMS services over the radio interface requires specific radio resource reservation methods, to be coordinated between eNodeBs.

The fact that the LTE MBMS signal is synchronized within the cyclic prefix bears significant advantages for the radio frame al L1 and L2, which need to be identified and exploited. Frame Numbering and related mechanisms (most probably) are not needed.

### Abbreviations

- ACK(s): Acknowledgement
- BCC: Base Station Colour Code
- BCCH: Broadcast Control Channel
- BS: Base station
- BSIC: Base Station Identity Code (UTRAN)
- CDMA: Code Division Multiple Access
- DL: Down Link
- DAB: Digital Audio Broadcasting
- DMB: Digital Multimedia Broadcasting
- DVB-H: Digital Video Broadcasting - Handhelds
- DVB-T: Digital Video Broadcasting - Terrestrial
- E/e: evolved
- EDGE: Enhanced Data rate for GSM Evolution
- ETSI: European Telecommunications Standards Institute
- FDMA: Frequency Division Multiple Access
- GERAN: GSM EDGE Radio Access Network
- GSM: Global System for Mobile Communication
- HCO: Hierarchical Cell Ordering
- HO: Handover
- LTE: Long Term Evolution
- MBMS: Multimedia Broadcast Multicast Service
- MIMO: Multiple Input Multiple Output
- MS: Mobile station
- NB: Node B
- NCC: Network Colour Code
- Node B: Base station (UMTS)
- OFDM: Orthogonal Frequency Division Multiplexing
- P-CPICH: Primary Common Pilot Channel (UTRAN)
- PLMN: Public Land Mobile Network
- QoS: Quality of Service
- RNC: Radio Network Controller
- RRM: Radio Resource Management
- SCH: Synchronization Channel
- S-CCPCH: Secondary Common Control Physical Channel
- SDMA: Space Division Multiple Access
- SFL: Single Frequency Layer
- SIB: System Information Block or Broadcast System Information (WCDMA for UMTS)
- SIR: Signal to Interference Ratio
- TDMA: Time Division Multiple Access
- 3GPP: Third Generation Partnership Project
- UE: User Equipment
- UL: Up Link
- UMTS: Universal Mobile Telecommunications System
- UTRAN: UMTS Terrestrial Radio Access Network
- W-CDMA: Wideband CDMA

## Claims

1. A method for radio communication within a mobile radio communications network, wherein information is transmitted via dedicated radio cells (Cell A_m) from a radio network node (A eUTRAN BS) serving said radio cells to at least one mobile station, whereby information further comprises pilot information for identifying said transmitted information at said mobile station with respect to the origin of said information and/or to said radio cell carrying said information.

2. A method as claimed in claim 1, wherein the pilot information is signalled with a signal power needed within said dedicated radio cell carrying said information.

3. A method as claimed in claim 1 or 2, wherein the dedicated radio cells provides multicast communication, in particular multimedia broadcast multicast services.

4. A method as claimed in any of the preceding claims, wherein the radio network node serves radio cells (Cell A_u) providing unicast communication and dedicated radio cells (Cell A_m) providing multicast communication.

5. A method as claimed in any of the preceding claims, wherein pilot information further comprises an identifier (BSIC) for dedicated radio cells particularly providing multicast communication.

6. A method as claimed in any of the preceding claims, wherein pilot information further comprises service specific information (MBMS Services ID) regarding multicast communication.

7. A method as claimed in claim 6, wherein said service specific information is related to at least one service currently multicasted by said radio network node.

8. A method as claimed in claim 6, wherein said service specific information is related to neighbouring cell information providing multicast communication.

9. Radio network node (A eUTRAN BS) for radio communication, comprising means for transmitting information to at least one mobile station via dedicated radio cells (Cell A_m), whereby information further comprises pilot information for identifying said transmitted information at said mobile station with respect to the origin of said information and/or to said radio cell carrying said information.

10. Radio network node as claimed in claim 9, further comprising means for adjusting signal power for said pilot information needed within said dedicated radio cell carrying said information.

11. Radio network node as claimed in claim 9 or 10, further comprising means for serving radio cells (Cell A_u) providing unicast communication and radio cells (Cell A_m) providing multicast communication, in particular multimedia broadcast multicast services.

12. A mobile station for radio communication, comprising means for receiving information from at least one radio network node (A eUTRAN BS) via dedicated radio cells (Cell A_m), whereby information further comprises pilot information for identifying said transmitted information at said mobile station with respect to the origin of said information and/or to said radio cell carrying said information.

13. A mobile station as claimed in claim 12, further comprising means for receiving information, preferably pilot information from at least one radio network node serving radio cells providing multicast communication, in particular multimedia broadcast multicast services.

14. A mobile station as claimed in claim 13, wherein said at least one radio network node further serving radio cells (Cell A_u) providing unicast communication.

15. Radio communications network comprising at least one radio network node according to claim 9, 10 or 11 and at least one mobile station according to claim 12, 13 or 14.
